**Europäisches Patentamt**

**European Patent Office**

**Office européen des brevets**

(11) Veröffentlichungsnummer: **0 288 756 B1**

(12) **EUROPÄISCHE PATENTSCHRIFT**

(45) Veröffentlichungstag der Patentschrift:
22.08.90

(21) Anmeldenummer: **88104894.6**

(22) Anmeldetag: **26.03.88**

(51) Int. Cl.⁵: **E06B 3/96**

(54) Eckverbinder zum Verbinden zweier auf Gehrung geschnittener Hohlkammerprofile.

<table>
<tr><td>(30) Priorität: <b>13.04.87 DE 3712478</b></td><td>(73) Patentinhaber: <b>Hüls Troisdorf Aktiengesellschaft, Postfach 11 65, D-5210 Troisdorf(DE)</b></td></tr>
<tr><td>(43) Veröffentlichungstag der Anmeldung:<br><b>02.11.88 Patentblatt 88/44</b></td><td>(72) Erfinder: <b>Budich, Wolfgang, Rubensstrasse 121, D-5210 Troisdorf(DE)</b><br>Erfinder: <b>Büscher, Hans, Auf dem Axberg 27, D-5210 Troisdorf-Müllekoven(DE)</b><br>Erfinder: <b>Ahrens, Maik, Am Telegraph 20, D-5202 Hennef-Söven(DE)</b></td></tr>
<tr><td>(45) Bekanntmachung des Hinweises auf die Patenterteilung:<br><b>22.08.90 Patentblatt 90/34</b></td><td></td></tr>
<tr><td>(84) Benannte Vertragsstaaten:<br><b>AT BE DE ES FR GB IT NL</b></td><td></td></tr>
<tr><td>(56) Entgegenhaltungen:<br><b>DE-A- 2 107 293<br>DE-A- 3 516 790<br>DE-U- 6 945 755<br>GB-A- 2 150 182</b></td><td></td></tr>
</table>

ACTORUM AG

## Beschreibung

Die Erfindung betrifft einen Eckverbinder zum Verbinden zweier auf Gehrung geschnittener Hohlkammerprofile gemäß dem Oberbegriff des Anspruchs 1.

Eckverbinder dienen zur Verbindung zweier auf Gehrung geschnittener Hohlkammerprofile, wobei die Eckverbinder (-halbstücke) in die Hohlkammerprofile eingeschoben, durch kraft- oder formschlüssige Verbindung an den Hohlkammerprofilen fixiert und untereinander durch Schrauben oder Verschweißen verbunden werden.

Derartige Eckverbinder zum Verbinden von Hohlkammerprofilen sind aus der DE-OS 17 75 385, DE-OS 21 30 639, DE-OS 21 34 520, DE-OS 21 29 858 und DE-OS 33 20 624 A1 bekannt. Ein gattungsgemäßer Eckverbinder ist weiterhin aus der DE-OS 23 36 839 bekanntgeworden.

Die zu verbindenden Hohlkammerprofile können als Metall- oder Kunststoffprofile ausgebildet sein, insbesondere aber als durch eingeschobene Metallhohlprofile versteifte Kunststoffprofile.

Die bekannten Eckverbinder haben den Nachteil, daß sie entweder unzureichend in dem Hohlkammerprofil fixiert werden können, so daß eine unzureichende Festigkeit und Steifigkeit der Eckverbindung zu verzeichnen ist, oder daß die Eckverbinder durch die äußere Kontur der Hohlkammerprofile durchdringende Befestigungselemente fixiert werden müssen. Letzteres ist insbesondere beim Einsatz von Eckverbindern zum Verbinden von Fenster- oder Türprofilen von Nachteil.

Aufgabe der Erfindung ist es deshalb, einen gattungsgemäßen Eckverbinder so fortzubilden, daß er eine Eckverbindung hoher Steifigkeit und Festigkeit ermöglicht, ohne daß Befestigungselemente eingesetzt werden müssen, die die äußere Kontur der Hohlkammerprofile durchstoßen, die also von außen sichtbar sind.

Die Erfindung löst diese Aufgabe durch einen Eckverbinder gemäß dem Anspruch 1, bevorzugt in Verbindung mit den Merkmalen der weiteren Ansprüche.

Zum Verbinden zweier auf Gehrung geschnittener Hohlkammerprofile wird je ein Eckverbinder gemäß der Erfindung in die bzw. eine der Hohlkammer(n) der Hohlkammerprofile geschoben. Zweckmäßig erfolgt das Einschieben derart, daß die als Schweißfläche ausgebildete Gehrungsfläche der Eckverbinder etwa bündig mit der Gehrungsfläche des Hohlkammerprofils abschließt, oder daß die Schweißfläche der Eckverbinder um einige mm das Hohlkammerprofil überragt.

Zum Fixieren der Eckverbinder in den Hohlkammerprofilen weist der Eckverbinder an dem der Gehrungsfläche entgegengesetzten Ende zwei kreuzförmig zueinander angeordnete Spreizschlitze sowie eine, sich etwa axial über die Länge des Eckverbinders erstreckende, zylindrische oder kegelförmige Bohrung auf. Durch Spreizen der Spreizschlitze wird eine kraftschlüssige Verbindung zwischen dem Eckverbinder und dem Hohlkammerprofil erreicht. Das Spreizen erfolgt beispielsweise durch einen an sich bekannten Spreizdübel, der in die zylindrische oder kegelförmige Bohrung eingebracht wurde. Der Spreizdübel wird dabei durch Anziehen einer in den Spreizdübel eingeschraubten Schraube o. dgl. gespreizt. Ein axiales Verschieben des Spreizdübels wird dabei durch eine entsprechend aufgerauhte oder mit Widerhaken versehene Außenkontur des Spreizdübels verhindert. Um die notwendige axiale Zugkraft auf den Spreizdübel ausüben zu können, weist die zylindrische oder kegelförmige Bohrung im Bereich der Gehrungsfläche des Eckverbinders einen entsprechenden Absatz auf. Es ist dabei wesentlich, daß der Schraubenkopf in diesen erweiterten Teil der Bohrung vollständig versenkbar ist, damit ein Verschweißen der Eckverbinder möglich ist.

Bevorzugt wird zum Spreizen der Eckverbinder ein kegelstumpfförmiger, in Achsrichtung ein Innengewinde aufweisender Spreizkeil verwendet, dessen größter Durchmesser größer und dessen kleinster Durchmesser kleiner ist als der Durchmesser der Bohrung des Eckverbinders am der Gehrungsfläche entgegengesetzten Ende. Bevorzugt weist der Spreizkeil eine oder mehrere Nasen auf, die in die Spreizschlitze des Eckverbinders eingreifen und so ein Drehen des Spreizkeils in der Bohrung des Eckverbinders verhindern.

Eine das Innengewinde des Spreizkeils eingeschraubte Schraube, deren Kopf in dem Eckverbinder versenkt angeordnet ist, bewirkt beim Anziehen der Schraube ein axiales Verschieben des Spreizkeils in Richtung auf die Gehrungsfläche des Eckverbinders. Damit wird die Spreizung des Eckverbinders am der Gehrungsfläche entgegengesetzten Ende des Eckverbinders bewirkt.

Die Außenkontur des Eckverbinders muß, um eine kraftschlüssige Verbindung des Eckverbinders mit dem Hohlkammerprofil zu ermöglichen, eine der Innenkontur des Hohlkammerprofils angepaßte Form aufweisen. Zweckmäßig weist der in das Hohlkammerprofil eingeschobene Eckverbinder dabei ein Spiel von etwa 0,1 bis 1,5 mm auf.

Soweit der Eckverbinder einen rechteckigen oder trapezförmigen Querschnitt aufweist, ist nach einer bevorzugten Weiterbildung der Erfindung vorgesehen, daß an drei der vier Außenflächen des Eckverbinders, ausgehend von der Gehrungsfläche, in Achsrichtung verlaufende, stegförmige Gleitnocken angebraht sind. Auf jeder dieser drei Außenflächen ist dabei wenigstens ein, bevorzugt zwei oder mehr Gleitnocken angebracht. Die Gleitnocken bewirken, daß der Eckverbinder beim Einschieben in die Hohlkammer des Hohlkammerprofils im Bereich der Gehrungsfläche durch Preßpassung mit dem Hohlkammerprofil rutschsicher verbunden ist. Die nicht mit Gleitnocken versehene vierte Außenfläche liegt dabei plan auf einer Innenwand der Hohlkammer des Hohlkammerprofils auf, so daß die Übertragung auch höherer Kräfte möglich ist.

Nach einer weiteren bevorzugten Ausführungsform der Erfindung ist im Bereich der Gehrungsfläche des Eckverbinders ein als Anschlag dienender Vorsprung ausgebildet. Dieser ermöglicht das paßgenaue Einschieben des Eckverbinders mit einer vorherbestimmbaren Einschubtiefe, so daß zum späteren Verschweißen der Eckverbinder ein definierter Schweißüberstand vorhanden ist.

Der erfindungsgemäße Eckverbinder kann sowohl zum Verbinden von Hohlkammerprofilen aus thermoplastischen Kunststoffen als auch von Hohlkammerprofilen aus anderen Werkstoffen, z.B. Aluminium, eingesetzt werden. Ein bevorzugtes Einsatzgebiet ist jedoch das Verbinden von mit eingesetzten Metallprofilen verstärkten thermoplastischen Kunststoffprofilen. Hierzu werden die verstärkten Profile vor dem Einsetzen der Eckverbinder auf Gehrung geschnitten, wobei die Verstärkungsprofile bevorzugt gegenüber der thermoplastischen Ummantelung um einige mm zurückspringen, um eine Verschweißung zu ermöglichen. Der als Anschlag dienende Vorsprung des erfindungsgemäßen Eckverbinders ist dabei bevorzugt so ausgebildet, daß er an dem gegenüber dem Mantel des Hohlkammerprofils zurückspringenden Verstärkungsprofil anliegt, so daß die Schweißfläche des Eckverbinders mit dem Mantel des Hohlkammerprofils bündig abschließt. Beim Verschweißen der Hohlkammerprofile mit den eingesetzten Eckverbindern wird in an sich bekannter Weise ein Schweißschwert in die Gehrungsfläche eingeführt. Durch Anpressen der beiden Hohlkammerprofile an das Schweißschwert wird die Schweißfläche des Eckverbinders sowie der Rand des Hohlkammerprofils angeschmolzen. Durch anschließendes Herausziehen des Schweißschwertes und Aneinanderpressen der Hohlkammerprofile wird eine feste Verschweißung erreicht.

Bevorzugt weist die Schweißfläche des Eckverbinders eine gegliederte Oberfläche auf, um ein Abfließen des schmelzförmigen Kunststoffs beim Verschweißen zu ermöglichen (siehe DE-OS 33 20 624 und DE-OS 23 36 839).

Im folgenden wird die Erfindung anhand eines Ausführungsbeispiels und der Zeichnung näher erläutert.

Es zeigen dabei

Figur 1 eine perspektivische Ansicht des erfindungsgemäßen Eckverbinders,
Figur 2 eine Seitenansicht des erfindungsgemäßen Eckverbinders,
Figur 3 einen Schnitt durch den erfindungsgemäßen Eckverbinder mit Spreizdübel und Schraube,
Figur 4 eine Ansicht eines auf Gehrung geschnittenen Hohlkammerprofils mit Verstärkungsprofil und Eckverbinder,
Figur 5 eine perspektivische Ansicht des Hohlkammerprofils gemäß Figur 4.

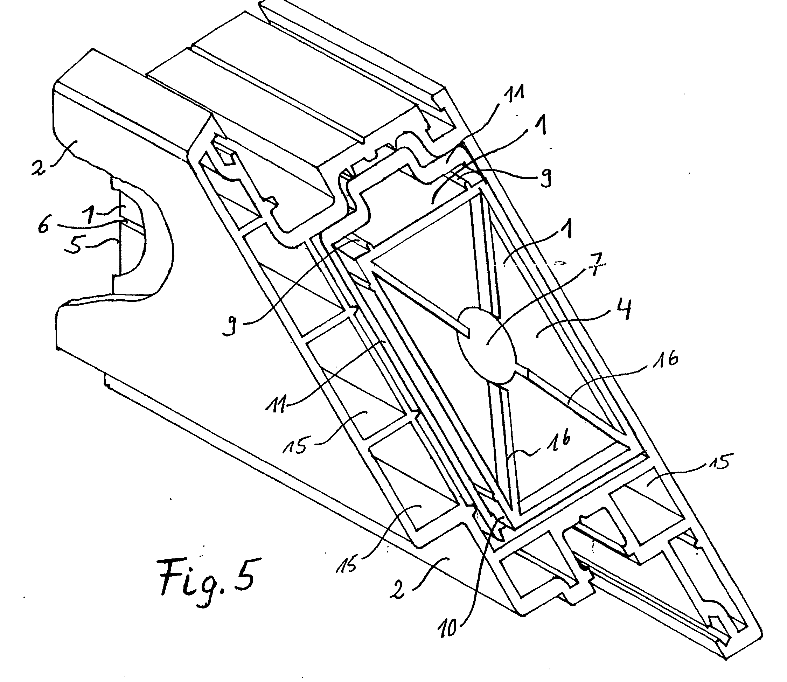

Bei dem in Figur 5 in perspektivischer Ansicht dargestellten Hohlkammerprofil 2 handelt es sich um ein mit einem Metalleinschubprofil 11 verstärktes Hart-PVC-Profil bekannter Art. Das ebenfalls hohle Verstärkungsprofil 11 ist dabei in die Hauptkammer des PVC-Hohlkammerprofils 2 eingeschoben und ggf. kraftschlüssig fixiert. Die Hohlkammer 3 des Verstärkungsprofils 11 dient zur Aufnahme des Eckverbinders 1. Hierzu ist die Außenkontur des Eckverbinders 1, der in dem dargestellten Ausführungsbeispiel der Erfindung einen rechteckigen Querschnitt aufweist, der Hohlkammer 3 des Verstärkungsprofils 11 angepaßt. Es ist besonders vorteilhaft, die Außenkontur des Eckverbinders 1 um einige 10tel Millimeter kleiner zu wählen als die Innenkontur des Verstärkungsprofils 11, so daß ein leichtes Einschieben des Eckverbinders 1 in die Hohlkammer 3 des Verstärkungsprofils 11 möglich ist.

Das Hohlkammerprofil 2 ist in dem Ausführungsbeispiel zwar mit einem Verstärkungsprofil 11 verstärkt, dieses ist jedoch nicht unbedingt notwendig. Ggf. kann der Eckverbinder 1 auch direkt in eine Hohlkammer des Hohlkammerprofils eingeschoben werden.

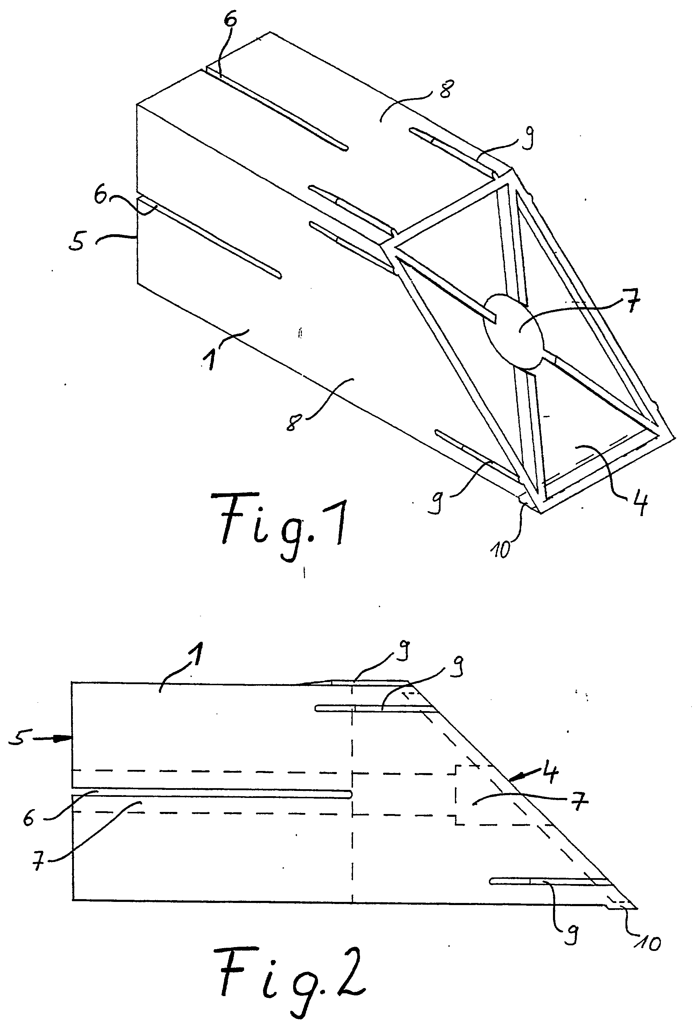

Der in den Figuren 1, 2 und 3 dargestellte Eckverbinder 1 weist sechs von der Gehrungsfläche 4 ausgehende Gleitnocken 9 auf, um eine kraftschlüssige Fixierung des Eckverbinders 1 in der Hohlkammer 3 zu ermöglichen. Die Gleitnocken 9 sind dabei nur an drei der vier Außenflächen 8 des Eckverbinders 1 angebracht, mit der vierten Außenfläche liegt der Eckverbinder 1 plan auf der entsprechenden Innenfläche des Verstärkungsprofils 11 auf. Auf diese Weise ist eine definierte, Toleranzen ausgleichende Fixierung des Eckverbinders 1 in dem Hohlkammerprofil 2 bzw. dem Verstärkungsprofil 11 möglich.

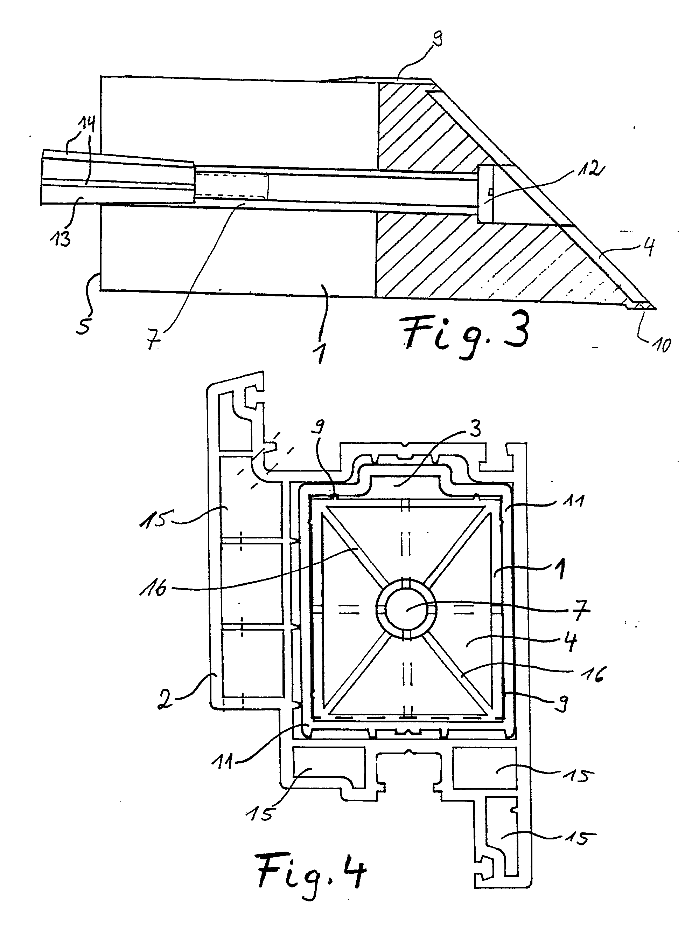

Gemäß Figuren 1 und 3 weist der Eckverbinder 1 an der Gehrungsfläche 4 einen Vorsprung 10 auf, der die Einschubtiefe des Eckverbinders 1 in dem Hohlkammerprofil 2 begrenzt. Im dargestellten Ausführungsbeispiel der Erfindung stößt dieser Vorsprung 10 an das Verstärkungsprofil 11 an, so daß die Gehrungsfläche 4 etwa 4 mm über das Verstärkungsprofil 11 übersteht. Da das Verstärkungsprofil 11 seinerseits etwa 4 mm gegenüber der Gehrungsfläche des Hohlkammerprofils 2 zurückspringt, lieger die Gehrungsflächen des Eckverbinders 1 und des Hohlkammerprofils 2 etwa in einer Ebene. Beim Verschweißen zweier mit den erfindungsgemäßen Eckverbindern 1 versehener und auf Gehrung geschnittener Hohlkammerprofile 2 mittels eines Schweißschwertes wird sowohl die Gehrungsfläche des Hohlprofils 2 als auch des Eckverbinders 1 teilweise abgeschmolzen. Das dabei abgeschmolzene thermoplastische Material kann dabei ungehindert in die Neben-Hohlkammern 15 des Hohlkamerprofils 2 sowie in die teilweise zurückspringende, also profilierte Gehrungsfläche 4 des Eckverbinders 1 abfließen. Entsprechend Figur 4 und Figur 5 ist die Gehrungsfläche 4 in an sich bekannter Art durch Diagonalstege 16 sowie einen umlaufenden Steg profiliert.

Der erfindungsgemäße Eckverbinder 1 weist an seinem der Gehrungsfläche 4 entgegengesetzen Ende 5 zwei kreuzförmig zueinander angeordnete Spreizschlitze 6 auf. Diese Spreizschlitze 6 stehen in Verbindung mit einer axial angeordneten, zylindrischen Bohrung 7, die von der Gehrungsfläche 4 zum gegenüberliegenden Ende 5 reicht. In diese Bohrung 7 wird vor dem Einschieben des Eckverbinders 1 in die Hohlkammer 3 eine Schraube 12 eingeführt und in den Spreizkeil 13 eingeschraubt. Der Spreizkeil 13 (Figur 3) weist eine etwa keglförmige Form auf, so daß beim Anziehen der Schraube 12 durch den Spreizkeil 13 eine Spreizung des Eckverbinders erfolgt. Um ein Drehen des Spreizkeils 13 in der Bohrung 7 beim Anziehen der Schraube 12 zu verhindern, weist der Spreizkeil 13 eine oder mehrere Rippen bzw. Stege 14 auf, die in die Spreizschlitze 6 des Eckverbinders 1 eingreifen.

Nach Einführen des Eckverbinders in die Hohlkammer 3 bis zum Anschlag des Vorsprungs 10 an dem Verstärkungsprofil 11 wird durch Anziehen der Schraube 12 und dadurch bewirktes Spreizen des Eckverbinders 1 an seinem der Gehrungsfläche 4 entgegengesetzten Ende 5 eine kraftschlüssige Verbindung zwischen dem Eckverbinder 1 und dem Verstärkungsprofil 11 bzw. dem Hohlkammerprofil 2 bewirkt.

Es ist erfindungswesentlich, daß die Schraube 12 wenigstens so weit in den Eckverbinder zurückspringt, daß beim späteren Verschweißen die Schraube 12 nicht in die Schweißfläche ragt.

## Patentansprüche

1. Eckverbinder (1) zum Verbinden zweier auf Gehrung geschnittener Hohlkammerprofile (2) durch Verschweißen,
– wobei die Außenkontur des Eckverbinders (1) so auf die Innenkontur der (einer) Hohlkammer (3) des Hohlkammerprofils (2) abgestimmt ist, daß der Eckverbinder (1) ganz oder teilweise in die Hohlkammer (3) eingeschoben werden kann,
– wobei der Eckverbinder (1) wenigstens weitgehend aus einem verschweißbaren Kunststoff besteht und
– wobei der Eckverbinder (1) eine als Schweißfläche ausgebildete Gehrungsfläche (4) aufweist, dadurch gekennzeichnet, daß der Eckverbinder (1) eine sich etwa axial über die gesamte Länge des Eckverbinders (1) erstreckende, zylindrische oder kegelförmige Bohrung (7) aufweist, die mit an dem der Gehrungsfläche (4) entgegengesetzten Ende (5) angeordneten Spreizschlitzen (6) in Verbindung steht, daß der Eckverbinder (1) einen Spreizdübel, Spreizkeil (13) oder ähnliches aufweist, der durch Anziehen einer in die Bohrung (7) eingeführten Schraube (12) o. dgl. gespreizt wird und/oder durch axiales Verschieben eine Spreizung des der Gehrungsfläche (4) entgegengesetzten Endes (5) des Eckverbinders (1) bewirkt, wobei der Kopf der Schraube (12) o. dgl. vollständig in der Bohrung (7) versenkt ist.

2. Eckverbinder nach Anspruch 1, dadurch gekennzeichnet, daß die Spreizschlitze (6) kreuzförmig zueinander angeordnet sind.

3. Eckverbinder nach einem der Ansprüche 1 bis 2, dadurch ge kennzeichnet, daß der Eckverbinder (1) einen etwa rechtekkigen oder trapezförmigen Querschnitt aufweist und daß an wenigstens drei der vier Außenflächen (8) des Eckverbinders (1), ausgehend von der Gehrungsfläche (4) in Achsrichtung verlaufende, stegförmige Gleitnocken (9) angebracht sind.

4. Eckverbinder nach einem der Ansprüche 1 bis 3, dadurch ge kennzeichnet, daß an der Gehrungsfläche (4) ein als Anschlag dienender Vorsprung (10) ausgebildet ist, der die Einschubtiefe des Eckverbinders (1) in die Hohlkammer (3) des Hohlkammerprofils (2) begrenzt.

5. Verwendung eines Eckverbinders nach einem der Ansprüche 1 bis 4 zum Verbinden zweier auf Gehrung geschnittener Hohlkammerprofile durch Verschweißen.

6. Verfahren zum Verbinden zweier auf Gehrung geschnittener Hohlkammerprofile (2) unter Verwendung eines Eckverbinders (1) nach einem der Ansprüche 1 bis 4 durch Verschweißen, gekennzeichnet durch folgende Verfahrensschritte:
– Einführen des Eckverbinders (1) in die (eine der) Hohlkammer(n) (3) der beiden Hohlkammerprofile (2) oder in die eingeschobene Verstärkungsprofile (11),
– kraftschlüssige Fixierung des Eckverbinders (1) durch Anziehen einer mit ihrem Kopf vollständig in den Eckverbinder (1) versenkten Schraube (12)
– und anschließendes Verschweißen der Gehrungsflächen (4) der Eckverbinder (81) sowie ggf. der Hohlkammerprofile (2).

7. Verfahren nach Anspruch 6, dadurch gekennzeichnet, daß die kraftschlüssige Fixierung der Eckverbinder (1) durch Spreizen eines Spreizdübels erfolgt.

## Claims

1. A corner joint (1) for connecting two mitred hollow chamber profiles (2) by welding, wherein the outer contour of the corner joint (1) is adapted to match the inner contour of the (one of the) hollow chamber(s) (3) of the hollow chamber profile (2) in such a manner that the corner joint (1) can be fully or partially inserted into the hollow chamber (3), the corner joint (1) can be fully or partially inserted into the hollow chamber (3), the corner joint (1) is made at least substantially of plastics material which can be welded and the corner joint (1) has a mitred surface (4) designed as a welding surface, characterised in that the corner joint (1) has a cylindrical or conical bore (7), which extends over the entire length of the corner joint (1) and is connected with expansion slots (6) arranged at the end (5) opposite the mitred surface (4), the corner joint (1) has an expanding dowel, expanding wedge (13) or the like, which is expanded by tightening a screw (12) or the like inserted in the bore (7) and/or by axial displacement effects an expansion of the end (5) of the corner joint (1) opposite the mitred surface (4), the head of the screw (12) or the like being completely countersunk in the bore (7).

2. A corner joint according to claim 1, characterised in that the expansion slots (6) are arranged relative to one another in the shape of a cross.

3. A corner joint according to one of claims 1 to 2, characterised in that the corner joint (1) has an approximately rectangular or trapezoidal cross section and ridge-shaped slide cams (9) which extend from the mitred surface (4) in the axial direction are arranged on at least three of the four outer surfaces (8) of the corner joint (1).

4. A corner joint according to one of claims 1 to 3, characterised in that a projection (10), which acts as a stop and limits the insertion depth of the corner joint (1) in the hollow chamber (3), is provided on the mitred surface (4).

5. Application of a corner joint according to one of claims 1 to 4 for connecting two mitred hollow chamber profiles by welding.

6. A method for connecting two mitred hollow chamber profiles (2) using a corner joint (1) according to one of claims 1 to 4 by welding, characterised by the following method steps:

– the introduction of the corner joint (1) into the (one of the) hollow chamber(s) (3) of the two hollow chamber profiles (2) or into reinforcing profiles (11) inserted in the said hollow chamber profiles (2),

– the frictional securing of the corner joint (1) by tightening a screw (12) with its head completely countersunk in the corner joint (1) and

– the subsequent welding of the mitred surfaces (4) of the corner joints (1) and, if necessary, the hollow chamber profiles (2).

7. A method according to claim 6, characterised in that the frictional securing of the corner joint (1) is effected by the expansion of an expanding dowel.

**Revendications**

1. Joint d'angle (1) pour l'assemblage par soudage de deux profilés tubulaires (2) pourvus de coupe d'onglet,

– le contour extérieur du joint d'angle (1) étant adapté au contour intérieur de la (d'une) cavité (3) du profilé tubulaire (2) de façon que le joint d'angle (1) puisse être engagé entièrement ou partiellement dans la cavité (3),

– le joint d'angle (1) étant réalisé au moins en majeure partie en une matière plastique soudable et

– le joint d'angle (1) comportant une surface oblique (4) réalisée sous la forme d'une surface de soudage, caractérisé par le fait que le joint d'angle (1) comporte un perçage (7) cylindrique ou conique qui s'étend sensiblement axialement sur toute la longueur du joint d'angle (1) et qui est raccordé à des fentes (6) pratiquées sur l'extrémité (5) opposée à la surface oblique (4), que le joint d'angle (1) comporte un piton à expansion, un coin (13) ou analogue qui est écarté par serrage d'une vis (12) ou analogue introduite dans le perçage (7) et/ou que, par déplacement axial, provoque un élargissement de l'extrémité (5), opposée à la surface oblique (4), du joint d'angle (1), la tête de la vis (12) ou analogue étant complètement noyée dans le perçage (7).

2. Joint d'angle selon la revendication 1, caractérisé par le fait que les fentes (6) sont disposées en forme de croix l'une par rapport à l'autre.

3. Joint d'angle selon l'une des revendications 1 à 2, caractérisé par le fait que le joint d'angle (1) a une section transversale sensiblement rectangulaire ou trapézoïdale et que sur au moins trois des quatre surfaces extérieures (8) du joint d'angle (1) sont aménagés des bossages de glissement (9) en forme de nervures disposés dans le sens axial à partir de la surface oblique (4).

4. Joint d'angle selon l'une des revendications 1 à 3, caractérisé par le fait que sur la surface oblique (4) est aménagée une saillie (10) qui sert de butée et qui limite la profondeur de l'engagement du joint d'angle (1) dans la cavité (3) du profilé tubulaire (2).

5. Utilisation d'un joint d'angle selon l'une des revendications 1 à 4 pour l'assemblage par soudage de deux profilés tubulaires pourvus de coupe d'onglet.

6. Procédé d'assemblage par soudage avec utilisation d'un joint d'angle (1) selon l'une des revendications 1 à 4 de deux profilés tubulaires (2) pourvus de coupe d'onglet, caractérisé par les phases successives du procédé:

– engagement du joint d'angle (1) dans la (l'une des) cavité(s) (3) des deux profilés creux (2) ou dans les profilés de renforcement (11) introduits dans ceux-ci;

– fixation du joint d'angle (1) par liaison par friction par serrage d'une vis (12) dont la tête est entièrement noyée dans le joint d'angle (1);

– et soudage consécutif des surfaces obliques (4) des joints d'angles (81) ainsi qu'éventuellement des profilés tubulaires (2).

7. Procédé selon la revendication 6, caractérisé par le fait que la fixation des joints d'angles (1) par une liaison par friction s'effectue par élargissement d'un piton à expansion.

*Fig.1*

*Fig.2*

EP 0 288 756 B1

Fig. 3

Fig. 4

Fig. 5